# EUROPÄISCHE PATENTSCHRIFT

(11) **EP 2 914 879 B1**
(45) Veröffentlichungstag und Bekanntmachung des Hinweises auf die Patenterteilung: **24.07.2019**
(21) Anmeldenummer: 13771464.8
(22) Anmeldetag: 01.10.2013
(51) Int. Cl.: F16H 59/08, G05G 1/08

(54) **VORRICHTUNG UND VERFAHREN ZUM AUSWÄHLEN EINER SCHALTERSTELLUNG**
DEVICE AND METHOD FOR SELECTING A SWITCH POSITION
DISPOSITIF ET PROCÉDÉ DE SÉLECTION D'UNE POSITION D'UN COMMUTATEUR

(30) Priorität: 30.10.2012 DE 102012219803
(43) Veröffentlichungstag der Anmeldung: 09.09.2015
(73) Patentinhaber: ZF Friedrichshafen AG, 88046 Friedrichshafen (DE)
(72) Erfinder: RAKE, Ludger, 49439 Steinfeld (DE); ROSENTRETER, Sascha, 32339 Espelkamp (DE); GIEFER, Andreas, 49448 Lemfoerde (DE)
(86) Internationale Anmeldenummer: PCT/EP2013/070387
(87) Internationale Veröffentlichungsnummer: WO 2014/067733

(56) Entgegenhaltungen:
- WO-A1-02/18882
- DE-A1-102004 049 011
- US-A- 3 236 116

## Beschreibung

Ausführungsbeispiele der vorliegenden Erfindung betreffen Vorrichtungen und Verfahren zum Auswählen einer Schalterstellung aus einer Mehrzahl von möglichen Schalterstellungen, insbesondere zum automatischen bzw. selbsttätigen Betätigen einer Schaltvorrichtung, um eine gewünschte Schalterstellung zu erreichen.

Derartige Vorrichtungen werden beispielsweise, keineswegs jedoch ausschließlich, in Kraftfahrzeugen (Kfz) zur Betätigung unterschiedlichster Systeme und Funktionen des Kraftfahrzeugs eingesetzt. Zahlreiche Systeme beziehungsweise Funktionen sind bei modernen Kraftfahrzeugen elektrisch betrieben bzw. elektronisch gesteuert. Dies gilt sowohl für komplexe mechanische Baugruppen des Antriebsstrangs wie beispielsweise für Fahrzeuggetriebe, als auch für einfachere Funktionen wie elektrische Sitzverstellung, Scheibenwischerantriebe, für diverse elektronische Geräte im Fahrzeug und dergleichen mehr.

Die ohne mechanische Verbindung auskommende elektrische bzw. elektronische Ansteuerung derartiger Systeme bringt es jedoch mit sich, dass unter Umständen eine nicht eindeutige Zuordnung zwischen der Position eines Betätigungselements und dem Zustand des mittels des Betätigungselements steuerbaren Systems, beispielsweise eines Fahrzeuggetriebes, vorliegt. Dies bedeutet mit anderen Worten, dass der am Betätigungs- bzw. Bedienelement gewählte Sollzustand des gesteuerten Systems, beispielsweise einer Fahrstufe des Fahrzeuggetriebes, nicht mit dem tatsächlichen Schaltzustand des Systems bzw. Getriebes übereinstimmt.

Eine derartige Divergenz zwischen den Zuständen eines technischen Systems und dessen Bedienelemente kann unterschiedliche Ursachen haben. So kann beispielsweise eine fehlerhafte oder nicht funktionierende Erkennung bzw. Detektion der Position des Bedienelements vorliegen, mit der Folge, dass die beispielsweise vom Fahrer am Bedienelement vorgewählte Getriebestufe vom System nicht erkannt und damit der entsprechende Steuerbefehl an das Getriebe nicht abgegeben wurde. Ebenso vorstellbar ist beispielsweise auch eine fehlerhafte oder nicht funktionierende Übertragung des Steuerbefehls zwischen dem Bedienelement und dem damit gesteuerten System.

Bei modernen Kraftfahrzeugen mit den dort eingesetzten, untereinander immer stärker vernetzten komplexen technischen Systemen tritt jedoch auch zunehmend häufig die Situation auf, dass technische Systeme, wie beispielsweise Fahrzeuggetriebe, ihren Betriebs- bzw. Schaltzustand ohne unmittelbare Einwirkung des Fahrers selbsttätig an veränderte Rahmenbedingungen anpassen und verändern. So ist es beispielsweise nicht ungebräuchlich, dass ein by-wire-gesteuertes Fahrzeuggetriebe beim Abstellen des Motors und nach dem Abziehen des Zündschlüssels, oder sobald der Fahrer das Fahrzeug verlässt, selbsttätig die Schaltposition "P" (= Parksperre) einnimmt.

Ein weiteres, lediglich der Veranschaulichung dienendes Beispiel bildet der vergleichsweise einfache Fall, bei dem das gesteuerte System die Scheibenwischanlage eines Fahrzeugs ist. Auch hierbei ist es bereits bekannt, dass sich der Scheibenwischer, beispielsweise bei auftretendem starkem Nebel oder beim Aufkommen von Niederschlägen, aufgrund von entsprechenden Sensorsignalen selbsttätig einschaltet. Dies bedeutet jedoch, dass der Betriebszustand des Scheibenwischers nun möglicherweise nicht mehr mit dem Schaltzustand des Betätigungselements für den Scheibenwischer übereinstimmt.

Das Betätigungselement signalisiert somit fälschlicherweise durch seine unveränderte Position in der "Aus"-Stellung, dass der Scheibenwischer ausgeschaltet ist, während dieser sich jedoch aufgrund der automatischen Aktivierung tatsächlich in Betrieb befindet. Wenn die tatsächliche Betriebsstellung im Fall des Scheibenwischers auch leicht erkennbar sein mag, so verbleibt doch zumindest das Problem, dass sich das Betätigungselement beim möglicherweise gewünschten manuellen Eingriff in die Scheibenwischerautomatik, also zum Ausschalten des Scheibenwischers jedoch bereits in der "Aus"-Stellung befindet.

Herkömmlicherweise behilft man sich bezüglich derartiger Unvereinbarkeiten teilweise mit rückfedernden Betätigungselementen, die sich nach der Betätigung stets selbsttätig wieder in eine neutrale Mittelstellung zurückstellen, oder teilweise mit äußerst komplizierten Schaltlogiken und entsprechenden Displayanzeigen, die sowohl den momentanen Betriebszustand des gesteuerten Systems darzustellen haben als auch die zur Steuerung notwendigen oder möglichen Bewegungsrichtungen des Betätigungselements anzeigen sollen.

In Bezug auf Drehschaltungen zum Auswählen einer bestimmten Fahrstufe, wie z.B. "P" (= Parksperre), "R" (= Rückwärts), "N" (= Neutral bzw. Leerlauf) oder "D" (= Drive bzw. Vorwärts), sind Schaltungen bekannt, die stabile Schalterstellungen aufweisen. Das kann beispielsweise mittels einer mechanischen Rastierung mit festen Endanschlägen erreicht werden. Beispielsweise, offenbart die deutsche Patent-Offenlegungsschrift DE102004049011A1 ein Drehsteller mit einer drehbar gelagerten Stellwelle und einem damit verbundenen Drehknopf, sowie mit einer Einrichtung zum Erzeugen einer Haptik beim Drehen des Drehknopfs. Eine eventuell zusätzliche Schalterposition "S" (= Sport) kann beispielsweise durch Drücken und Drehen des Drehknaufes aus der Position "D" heraus erreicht werden. Bekannte Drehschaltungen beinhalten eine zusätzliche "AutoP"-Funktion, bei der, falls im Getriebe automatisch eine Parksperre eingelegt wurde, auch der Drehknauf mittels eines Aktors aus jeder Position heraus nach Position "P" gedreht werden kann. Hierbei kann gleichzeitig der Drehknauf abgesenkt werden. Bei anderen Varianten wird der Drehknauf jedoch weder zurückgedreht noch abgesenkt. Vielmehr kann hier der Drehknauf fixiert und eine Rastierung bzw. Rastkurve zurückgedreht werden. Dabei wird bei einer bekannten Ausführung sowohl die Fixierung der Rastierung bzw. Rastkurve als auch die Fixierung eines Bedienelements in Form eines Drehknaufes mittels eines einzigen Aktors (z.B. Elektromotor mit Getriebe) realisiert. Dies hat aber den Nachteil der zeitlichen Abfolge und dadurch bedingt ein störendes Geräusch des Aktors. Das Zurückdrehen der Rastkurve aus jeder Position heraus nach "P" erfolgt vermittels eines zweiten Aktors.

Eine Aufgabe der vorliegenden Erfindung ist daher die Weiterbildung und Verbesserung des angeführten Stands der Technik z.B. im Hinblick auf Bauteileinsparung, Geräuschreduktion und Komplexität.

Diese Aufgabe wird durch eine Vorrichtung und ein Verfahren mit den Merkmalen der unabhängigen Patentansprüche gelöst.

Vorteilhafte Ausführungsformen und Weiterbildungen sind Gegenstand der abhängigen Ansprüche sowie der nachfolgenden detaillierten Beschreibung.

Gemäß einem Kerngedanken der vorliegenden Erfindung kann einerseits sowohl eine effiziente und hochauflösende Verdrehung einer Rastkurve zur Auswahl einer Schalterstellung, andererseits aber auch deren zuverlässige Fixierung vermittels einer Malteserkreuzgetriebestruktur und unter Ausnutzung derer Eigenschaften erreicht werden. Die Malteserkreuzgetriebestruktur ist dabei bei Ausführungsbeispielen drehfest mit der Rastkurve gekoppelt. Dazu können beide, d.h. Malteserkreuzgetriebestruktur und Rastkurve, in ein gemeinsames Trägerbauteil eingeformt sein, welches relativ zu einem Bedienelement für einen Rastbolzen, wie z.B. einem Drehknauf, verdrehbar gelagert ist.

Gemäß einem ersten Aspekt der vorliegenden Erfindung ist eine Vorrichtung zum Auswählen einer gewünschten Schalterstellung aus einer Mehrzahl von Schalterstellungen vorgesehen. Dabei hängt eine Schalterstellung von einer Stellung bzw. Position wenigstens eines Rastbolzens bzw. -stifts relativ zu einer Rastkurve ab. Die Rastkurve definiert dabei in der Art einer Schaltkulisse eine Rastung in Form eines Kraft-Weg-Verlaufes bei translatorischen Bedienelementen bzw. eines Drehmoment-Drehwinkel-Verlaufes bei rotatorischen Bedienelementen. Ferner stellt die Rastkurve eine Größe dar, die darüber entscheidet, wie sich die Rastung beim Auswählen der Schalterstellung anfühlt. Die Vorrichtung umfasst ein unterhalb einer Bedienoberfläche, wie z. B. einer Mittelkonsole eines Kfz, anordenbares und relativ zu dem Rastbolzen um eine Welle rotierbares Trägerbauteil. Dabei ist in dem Trägerbauteil, vorzugsweise in einem Umfangsbereich davon, die Rastkurve ausgebildet. Ferner ist in das Trägerbauteil eine Malteserkreuzgetriebestruktur ein- bzw angeformt. Ein Malteserkreuzgetriebe, manchmal auch als Sternrad bezeichnet, ist allgemein bekannt als ein Übertragungsgetriebe zur Umwandlung einer umlaufenden Drehung in eine umlaufende Drehung mit mehreren exakten Rasten, d.h. ein Schrittgetriebe. Gemäß Ausführungsbeispielen kann es sich bei der Malteserkreuzgetriebestruktur um ein Außen-Malteserkreuzgetriebe handeln. Die Vorrichtung weist ferner eine mit der Malteserkreuzgetriebestruktur in Eingriff oder in Drehmitnahmeverbindung stehende Antriebseinrichtung auf, die ausgebildet ist, um das Trägerbauteil mit der darin integrierten Rastkurve relativ zu dem Rastbolzen abhängig von der gewünschten Schalterstellung um die Welle zu verdrehen.

Um den Rastbolzen bzw. den Drehknauf gelegentlich festzulegen, beispielsweise bei einer automatischen Schalterverstellung (z.B. AutoP-Funktion) oder für eine Blockierung des Bedienelements (z.B. Shiftlock-Funktion in einer der Schalterstellungen "P" oder "N"), kann die Vorrichtung zusätzlich eine Fixiereinrichtung aufweisen, die ausgebildet ist, um den Rastbolzen bzw. den Drehknauf in einer absoluten Winkelstellung des Rastbolzens zu fixieren. Insbesondere kann die Fixiereinrichtung ausgebildet sein, um den Rastbolzen bzw. den Drehknauf vor und während einer durch Zusammenwirken der Antriebseinrichtung und der Malteserkreuzgetriebestruktur erfolgenden Verdrehung des Trägerbauteils relativ zu dem Rastbolzen in einer absoluten Winkelstellung des Rastbolzens zu fixieren. Dadurch kann beispielsweise eine AutoP-Funktion realisiert werden.

Sowohl die Antriebseinrichtung für die Malteserkreuzgetriebestruktur als auch die Fixiereinrichtung können durch entsprechende Aktoren bzw. Aktuatoren gebildet werden, welche elektronische bzw. elektrische Signale, wie z. B. von einem Steuerrechner ausgehende Befehle, in mechanische Bewegung oder andere physikalische Größen umsetzen.

Dabei dient die Antriebseinrichtung für die Malteserkreuzgetriebestruktur gemäß Ausführungsbeispielen sowohl einerseits zum Antreiben als auch andererseits zum Fixieren des Trägerbauteils und damit der darin eingeformten Rastkurve. Angetrieben werden kann das Trägerbauteil während die Fixiereinrichtung den Rastbolzen gleichzeitig festlegt, also in einer Winkelstellung festhält. Die Antriebseinrichtung kann also ausgebildet sein, um das Trägerbauteil relativ zu dem Rastbolzen zu verdrehen, während der Rastbolzen vermittels der Fixiereinrichtung in seiner absoluten Winkelstellung fixiert ist. Umgekehrt wird das Trägerbauteil, d.h. die Rastkurve, fixiert, während der Rastbolzen vermittels des Bedienteils in der fixierten Rastkurve bewegt werden kann. Die Fixierung der im Trägerbauteil integrierten Rastierung erfolgt gemäß Ausführungsbeispielen also in jeder Position ohne Aktor, sondern rein mechanisch durch den vorteilhaften Einsatz des Malteserkreuzgetriebes und unter Ausnutzung seiner Sperr- bzw. Stillstandsstellung. Durch diese Getriebeart kann außerdem das Bedienelement (z.B. Drehknauf) sehr spielarm ausgeführt werden. Es treten bei der Fixierung der Rastkurve auch keine störenden Aktorgeräusche auf.

Demgegenüber dient die Fixiereinrichtung in erster Linie zum Fixieren einer absoluten Winkelposition des Rastbolzens bzw. des damit drehfest gekoppelten Bedienelements, und zwar während die Antriebseinrichtung die Malteserkreuzgetriebestruktur in Rotation versetzt. Die Fixiereinrichtung kann dazu eine drehfest mit dem Rastbolzen gekoppelte Sperrscheibe aufweisen, an deren Umfang eine Mehrzahl von Ausnehmungen angeordnet sein kann, wobei jede der Ausnehmungen einer der Schalterstellungen entsprechen kann. Eine Sperreinrichtung kann ausgebildet sein, um zum Fixieren der absoluten Winkelstellung des Rastbolzens einen radialen Sperrbolzen in wenigstens eine der radialen Ausnehmungen der Sperrscheibe zu führen. Dazu kann die Sperreinrichtung beispielsweise einen Elektromagneten zur Betätigung des Sperrbolzens aufweisen. Dies ermöglicht eine sehr schnelle und geräuscharme Fixierung des Rastbolzens bzw. des damit drehfest verbundenen Bedienelements (z.B. Drehknauf).

Gemäß einigen Ausführungsbeispielen kann die aktuatorische Antriebseinrichtung für die Malteserkreuzgetriebestruktur einen in Abhängigkeit von einer absoluten Winkelstellung der Malteserkreuzgetriebestruktur und/oder in Abhängigkeit einer absoluten Winkelstellung des Rastbolzens (oder eines damit gekoppelten Bauteils) steuerbaren Elektromotor und eine vermittels des Elektromotors antreibbare und mit der Malteserkreuzgetriebestruktur in Eingriff stehende mechanische Antriebsstruktur für das rotierbare Trägerbauteil aufweisen. Aus der absoluten Winkelstellung der Malteserkreuzgetriebestruktur bzw. des Trägerbauteils und der absoluten Winkelstellung des Rastbolzens lassen sich eine relative Winkelstellung und damit auch eine dementsprechende Schalterstellung ableiten. Um die jeweiligen absoluten Winkelstellungen erfassen zu können, können eine oder mehrere entsprechende Sensor- bzw. Erfassungseinrichtung vorgesehen sein. Diese können auf mechanischen, elektronischen, und/oder optischen Funktionsweisen basieren. Der Elektromotor und die damit zusammenwirkende Antriebsstruktur bilden zusammen einen Aktor, vermittels dem das Zurückdrehen der Rastierung aus jeder Position heraus zu einer gewünschten Schalterstellung (z.B. "P") erfolgen kann.

Die Antriebsstruktur kann beispielsweise eine Zahnradstruktur (Malteserkreuzantriebsrad) mit einem auf einer der Malteserkreuzgetriebestruktur zugewandten Stirnfläche der Zahnradstruktur angeordneten ersten Eingriffselement und einem auf der Stirnfläche angeordneten zweiten Eingriffselement aufweisen, wobei das erste und das zweite Eingriffselement bei einer Rotation der Zahnradstruktur abwechselnd in die Malteserkreuzgetriebestruktur eingreifen, um eine intermittierende Drehung der Malteserkreuzgetriebestruktur (mit Stillstands- und Rotationsphase) zu bewirken. Ferner kann die Antriebsstruktur eine vermittels des Elektromotors rotierbare und mit am Umfang der Zahnradstruktur befindlichen Zähnen in Eingriff stehende Schnecke (Schneckenrad) umfassen, um durch Wechselwirkung zwischen der rotierenden Schnecke und den Zähnen die Zahnradstruktur bzw. das Malteserkreuzantriebsrad in Rotation versetzen zu können. Der Elektromotor mit Schneckenrad kann also ein Malteserkreuzantriebsrad antreiben, welches mit der im Träger integrierten Malteserkreuzkontur im Eingriff steht und somit die im Träger integrierte Rastierung bzw. Rastkurve in die gewünschte Schalterstellung (z.B. "P") zurückdrehen kann.

Gemäß manchen Ausführungsbeispielen kann die Vorrichtung zum Auswählen einer gewünschten Fahrstufe aus einer Mehrzahl von Fahrstufen, wie z.B. "P" (= Parksperre), "R" (= Rückwärts), "N" (= Neutral bzw. Leerlauf) oder "D" (= Drive bzw. Vorwärts), eines Kraftfahrzeugs ausgebildet sein. Dementsprechend ist gemäß einem weiteren Aspekt der vorliegenden Erfindung auch ein Kraftfahrzeug mit einer erfindungsgemäßen Vorrichtung vorgesehen. Selbstverständlich sind die Einsatzmöglichkeiten einer erfindungsgemäßen Vorrichtung vielfältig und nicht auf die Auswahl von Fahrstufen begrenzt. Ebenso können damit beispielsweise Scheibenwischerintervalle geschaltet werden. Einsatzmöglichkeiten außerhalb eines Kfz sind ebenso denkbar, wie z.B. der Einsatz in Haushaltsgeräten.

Gemäß einem noch weiteren Aspekt der vorliegenden Erfindung wird auch ein Verfahren zum Auswählen einer gewünschten Schalterstellung aus einer Mehrzahl von Schalterstellungen für eine Vorrichtung bereitgestellt, wobei eine Schalterstellung von einer Stellung wenigstens eines Rastbolzens relativ zu einer Rastkurve abhängt. Die Vorrichtung umfasst ein unterhalb einer Bedienoberfläche anordenbares und relativ zu dem Rastbolzen um eine Welle rotierbares Trägerbauteil für ein Bedienelement, wobei in dem Trägerbauteil die Rastkurve ausgebildet ist, und wobei in das Trägerbauteil eine Malteserkreuzgetriebestruktur eingeformt ist. Ferner umfasst das Verfahren einen Schritt des Verdrehens des Trägerbauteils mittels einer mit der Malteserkreuzgetriebestruktur in Eingriff stehenden Antriebseinrichtung, so dass sich das Trägerbauteil zusammen mit der Rastkurve relativ zu dem Rastbolzen abhängig von der gewünschten Schalterstellung um die Welle dreht. Das Verdrehen kann dabei gesteuert durch eine elektronische Steuervorrichtung erfolgen.

Einige exemplarische Ausführungsbeispiele der vorliegenden Erfindung werden nun nachfolgend anhand der beiliegenden Figuren näher erläutert. Es zeigen:
- Fig. 1: eine isometrische Darstellung einer Vorrichtung zum Auswählen einer gewünschten Schalterstellung aus einer Mehrzahl von Schalterstellungen, gemäß einem Ausführungsbeispiel;
- Fig. 2: perspektive Darstellungen von Ober- und Unterseite eines Trägerbauteils gemäß einem Ausführungsbeispiel;
- Fig. 3a-g: einen Bewegungsablauf einer Malteserkreuzgetriebestruktur vermittels einer vollen Umdrehung eines Antriebsrads;
- Fig. 4: eine drehfeste Kopplung von Bedienelement, Sperrscheibe und Rastbolzen über eine Welle;
- Fig. 5: eine Draufsicht auf Sperrmechanismus für das Bedienelement;
- Fig. 6: eine Schnittansicht der Vorrichtung gemäß Fig. 1; und
- Fig. 7: eine Darstellung der Vorrichtung gemäß Fig. 1 mit Gehäuse.

In der nachfolgenden Beschreibung einiger exemplarischer Ausführungsbeispiele anhand der beiliegenden Figuren können gleiche Bezugszeichen gleiche oder zumindest funktional ähnliche Bauteile bedeuten.

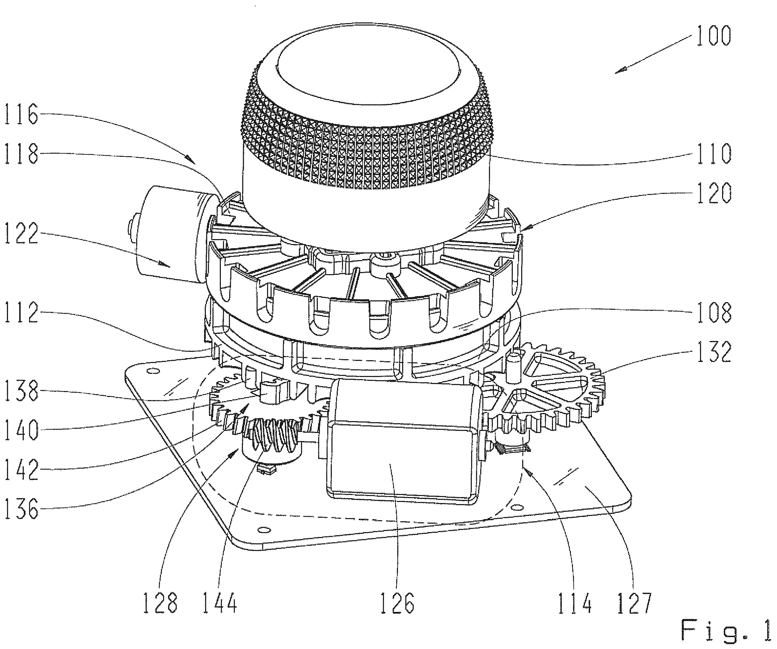

Die Fig. 1 zeigt eine isometrische Darstellung einer Vorrichtung 100 zum Auswählen einer gewünschten Schalterstellung aus einer Mehrzahl von Schalterstellungen gemäß einem möglichen Ausführungsbeispiel der vorliegenden Erfindung. Bei der Vorrichtung 100 hängt eine gewählte Schalterstellung von einer Stellung bzw. Winkelposition wenigstens eines in der Fig. 1 nicht sichtbaren Rastbolzens relativ zu einer ebenfalls nicht sichtbaren Rastkurve ab.

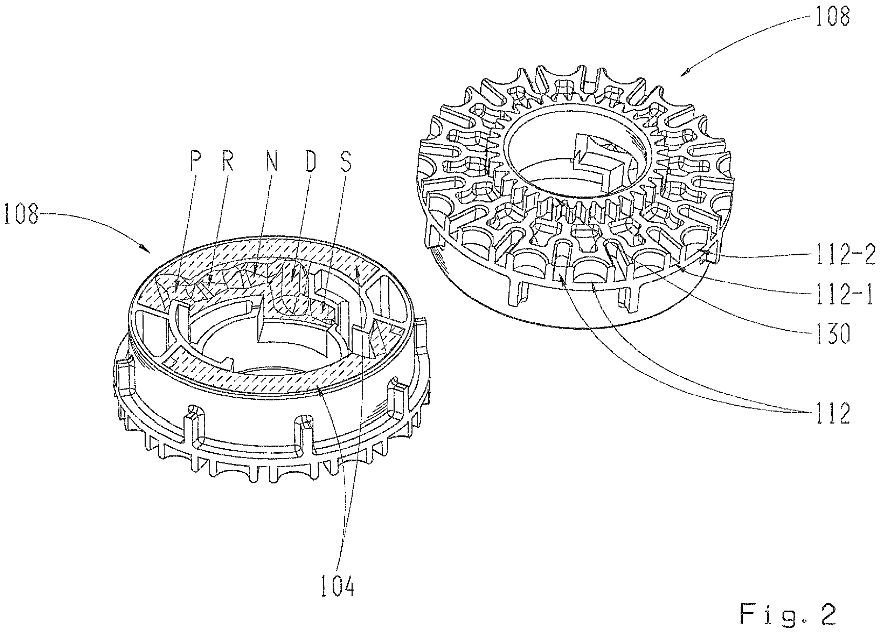

Die Vorrichtung 100 weist ein unterhalb einer gedachten Bedienoberfläche, wie z.B. eine Mittekonsole eines Kraftfahrzeugs, anordenbares und relativ zu dem Rastbolzen um eine nicht sichtbare Welle bzw. Achse rotierbares Trägerbauteil 108 für ein oberhalb der Bedienoberfläche anordenbares Bedienelement 110 auf. Die Rastkurve ist in dem Trägerbauteil 108 eingeformt. Das Bedienelement 110 ist in dem dargestellten Ausführungsbeispiel ein Drehknauf, der über eine von dem Drehknauf 110 zu dem rotierbaren Trägerbauteil 108 verlaufende Welle drehfest mit wenigstens einem (in der Fig. 1 nicht sichtbaren) Rastbolzen gekoppelt ist. Durch Drehung des Drehknaufs 110 erfolgt also ebenfalls eine Drehung des Rastbolzens relativ zu der in dem Trägerbauteil 108 integrierten Rastkurve. Kennzeichnend ist, dass in das Trägerbauteil 108 eine Malteserkreuzgetriebestruktur 112 eingeformt bzw. angeformt ist, wie man es insbesondere in einer der Darstellungen der Fig. 2 erkennen kann.

Die Fig. 2 zeigt auf der linken Seite eine isometrische Darstellung der Oberseite des Trägerbauteils 108 bzw. dessen dem Bedienelement 110 in axialer Richtung zugewandter Seite. Auf der rechten Seite der Fig. 2 ist die Unterseite des Trägerbauteils 108 dargestellt bzw. dessen dem Bedienelement 110 in axialer Richtung abgewandte Seite.

Auf der linken Seite der Fig. 2 lässt sich die in das Trägerbauteil 108 eingeformte Rastkurve bzw. Rastierung 104 erkennen. Die Rastierung 104 ist dabei in gegenüberliegenden (d.h. im 180°-Winkel gegenüberliegenden) inneren Umfangsbereichen des um eine Achse bzw. Welle rotierbaren Trägerbauteils 108 eingeformt. Verschiedene mit "P", "R", "N", "D", und "S" bezeichnete Raststufen der Rastierung 104 bezeichnen dabei die verschiedenen durch die Vorrichtung 100 anwählbaren Schalterstellungen, die z.B. Fahrstufen eines Kfz bzw. eines Automatik-Getriebes sein können. Während sich die Schalterstellungen "P", "R", "N" und "D" in einem axial oberen Bereich der Rastkurve 104 befinden, liegt die Schaltstufe "S" in einem demgegenüber axial weiter unten liegenden Bereich der Rastkurve 104, welcher aus der Schalterstellung "D" durch Drücken und/oder Drehen des Bedienelements bzw. des Drehknaufs 110 und des damit gekoppelten Rastbolzens nach unten erreicht werden kann, wie es später noch deutlich werden wird.

Wie bereits erwähnt, kann die Unterseite des Trägerbauteils 108 die Malteserkreuzgetriebestruktur 112 aufweisen, welche wiederum in Umfangsrichtung abwechselnd angeordnete radiale Schlitze 112-1 und Kreissegmentsperren 112-2 aufweist, siehe Fig. 2, rechts. Genau genommen handelt es sich bei der dargestellten Malteserkreuzgetriebestruktur 112 um ein Außen-Malteserkreuzgetriebe, welches auf der Unterseite des Trägerbauteils 108 ein- bzw. angeformt sein kann. Zusätzlich kann die Unterseite des rotierbaren Trägerbauteils 108 zur Erfassung einer absoluten Winkelstellung der Malteserkreuzgetriebestruktur 112 bzw. des Trägers 108 eine ringförmige Zahnradstruktur 130 aufweisen, welche mit einem in der Fig. 2 nicht dargestellten Sensorzahnrad zur Ermittlung der absoluten Winkelstellung des Trägerbauteils bzw. der Malteserkreuzgetriebestruktur 112 in Eingriff gebracht werden kann. Auch das wird weiter unten noch erläutert. Die Malteserkreuzgetriebestruktur 112 und die Zahnradstruktur 130 können konzentrisch zueinander und jeweils rotationssymmetrisch ausgebildet sein.

Zurückkommend auf die in Fig. 1 gezeigte Vorrichtung 100, kann diese ferner eine mit der Malteserkreuzgetriebestruktur 112 im Eingriff stehende Antriebseinrichtung 114 aufweisen, die ausgebildet ist, um das Trägerbauteil 108 mit der darin in einem Umfangsbereich integrierten Rastkurve 104 relativ zu dem wenigstens einen Rastbolzen bzw. -stift abhängig von der gewünschten Schalterstellung "P", "R", "N", "D", oder "S" um die Welle, die als Rotationsachse fungiert, zu verdrehen.

Gemäß dem dargestellten Ausführungsbeispiel kann die Antriebseinrichtung 114 einen in Abhängigkeit von einer absoluten Winkelstellung der Malteserkreuzgetriebestruktur 112 bzw. des Trägers 108 und/oder in Abhängigkeit einer absoluten Winkelstellung des Rastbolzens bzw. des damit drehfest verbundenen Drehknaufs 110 steuerbaren Elektromotor 126 aufweisen. Eine diesbezügliche Steuereinrichtung ist nicht explizit dargestellt, kann aber ebenfalls auf einer Platine 127 untergebracht sein.

Die Antriebseinrichtung 114 kann ferner eine vermittels des Elektromotors 126 antreibbare und mit der Malteserkreuzgetriebestruktur 112 in Eingriff stehende Antriebsstruktur 128 für das rotierbare Trägerbauteil 108 bzw. das Malteserkreuzgetriebe 112 aufweisen. Wie aus Fig. 1 ersichtlich, kann die Antriebsstruktur 128 wiederum eine Zahnradstruktur 136 mit einem auf einer der Malteserkreuzgetriebestruktur 112 zugewandten Stirnfläche der Zahnradstruktur 136 angeordneten ersten Eingriffselement 138 (Treiberbolzen) und einem auf der Stirnfläche angeordneten zweiten Eingriffselement 140 (Sperrbolzen) aufweisen, wobei das erste und das zweite Eingriffselement 138, 140 bei einer Rotation der Zahnradstruktur 136 abwechselnd in die radialen Schlitze 112-1 und Sperrsegmente 112-2 der Malteserkreuzgetriebestruktur 112 eingreifen, um eine intermittierende Drehung der Malteserkreuzgetriebestruktur 112 zu bewirken. Des Weiteren kann die mechanische Antriebsstruktur 128 eine vermittels des Elektromotors 126 rotierbare und mit am Umfang der Zahnradstruktur 136 befindlichen Zähnen 142 im Eingriff stehende schraubenförmige Schnecke 144 aufweisen, um durch Wechselwirkung zwischen der rotierenden Schnecke 144 und den Zähnen 142 die Antriebszahnradstruktur 136 in eine kontinuierliche Rotation versetzen zu können.

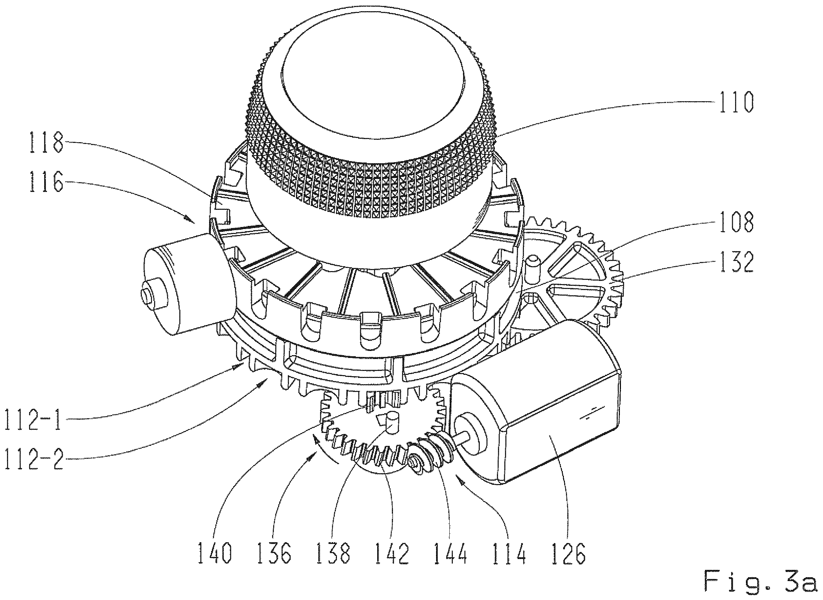

Die Funktionsweise der Antriebseinrichtung 114 für die Malteserkreuzgetriebestruktur 112 wird insbesondere anhand der Figuren 3a bis 3g deutlich, welche einen Bewegungsablauf der Malteserkreuzgetriebestruktur 112 bzw. des Trägerbauteils 108 anhand einer vollen Umdrehung des Antriebsrads 136 erläutern.

Die Fig. 3a zeigt das Antriebszahnrad 136 und die damit über die Eingriffselemente 138, 140 in Eingriff stehende Malteserkreuzgetriebestruktur 112 in einer Ausgangsposition. Wie sich anhand der Fig. 3a erkennen lässt, greift das zweite Eingriffselement bzw. das Sperrelement 140 in dieser Position in eine Kreissegmentsperre 112-2 der Malteserkreuzgetriebestruktur 112 ein. Das erste Eingriffselement bzw. der Treiberbolzen 138 befindet sich außerhalb der Malteserkreuzgetriebestruktur 112, d.h., er steht nicht im Eingriff mit einem radial verlaufenden Schlitz 112-1. Obwohl sich die Zahnradstruktur 136 in diesem dargestellten Beispiel kontinuierlich im Uhrzeigersinn dreht (angetrieben durch die Schnecke 144 und den Elektromotor 126), ist die Malteserkreuzgetriebestruktur 112 in der Stellung der Fig. 3a durch eine aus der Kreissegmentsperre 112-2 und dem darin eingreifenden Sperrbolzen 140 gebildete Verdrehsicherung gegen Verdrehen gesichert. In der gemäß Fig. 3a gezeigten Position steht das rotierbare Trägerbauteil 108 also trotz rotierender Zahnradstruktur 136 still. Das Bedienteil 110 ist demgegenüber während der Rotation des Antriebsrads 136 durch eine Fixiereinrichtung 116 gegen Verdrehen gesichert, wie es weiter unten noch detaillierter dargestellt wird.

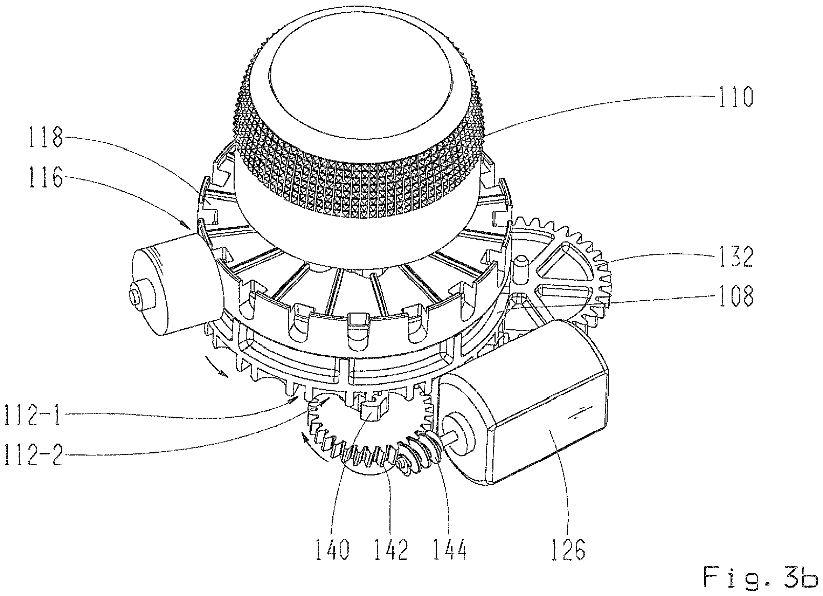

Bei der anhand der Fig. 3b gezeigten Relativposition zwischen Antriebsrad 136 und damit im Eingriff stehender Malteserkreuzgetriebestruktur 112 befindet sich der Treiberbolzen 138 der Zahnradstruktur 136 im Eingriff mit einem radialen Schlitz 112-1 der Malteserkreuzgetriebestruktur 112, so dass es dadurch zu einer Drehbewegung des Trägerbauteils 108 entgegen dem Uhrzeigersinn (d.h. gegenläufig zur Drehbewegung der Zahnradstruktur 136) kommt. Der Sperrbolzen 140 steht demgegenüber nicht im Eingriff mit einer Kreissegmentsperre 112-2 der Malteserkreuzgetriebestruktur, so dass in dieser Phase insgesamt eine Drehbewegung des Trägerbauteils 108 möglich ist.

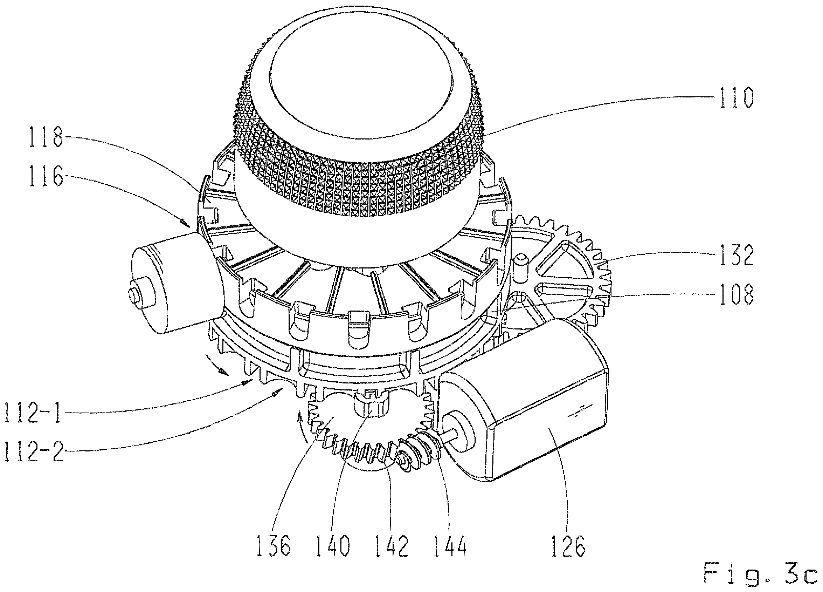

Die Fig. 3c zeigt dieselbe Anordnung, wobei hier gegenüber der Darstellung der Fig. 3b das Trägerbauteil 108 weiter entgegen dem Uhrzeigersinn gedreht wurde. Nach wie vor steht der Treiberbolzen 138 der Zahnradstruktur 136 im Eingriff mit dem radialen Schlitz 112-1 und der Sperrbolzen 140 greift nicht in eine Kreissegmentsperre 112-2 der Malteserkreuzgetriebestruktur 112 ein. In dieser Phase wird die Rotation des Antriebsrads 136 über den Treiberbolzen 138 und die Malteserkreuzgetriebestruktur 112 in eine gegenläufige Rotation des Trägers 138 umgesetzt.

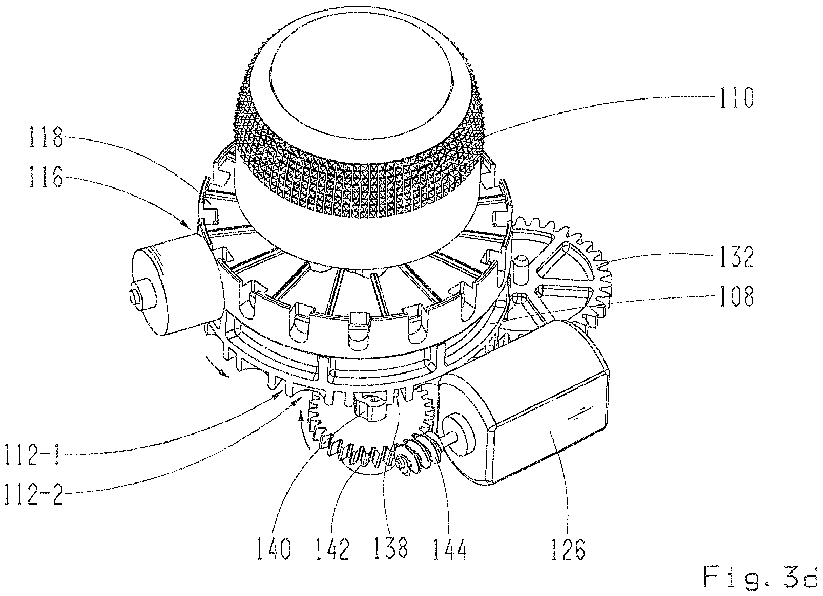

Die Fig. 3d zeigt das Trägerbauteil 108 in einem gegenüber der Fig. 3c noch weiter entgegen dem Uhrzeigersinn verdrehten Zustand. Hier steht der Treiberbolzen 138 der Zahnradstruktur 136 kurz vor dem Austritt aus dem radialen Schlitz 112-1 der Malteserkreuzgetriebestruktur 112. Demgegenüber steht der Sperrbolzen 140 kurz vor dem Eingriff in eine Kreissegmentsperre 112-2 der Malteserkreuzgetriebestruktur 112.

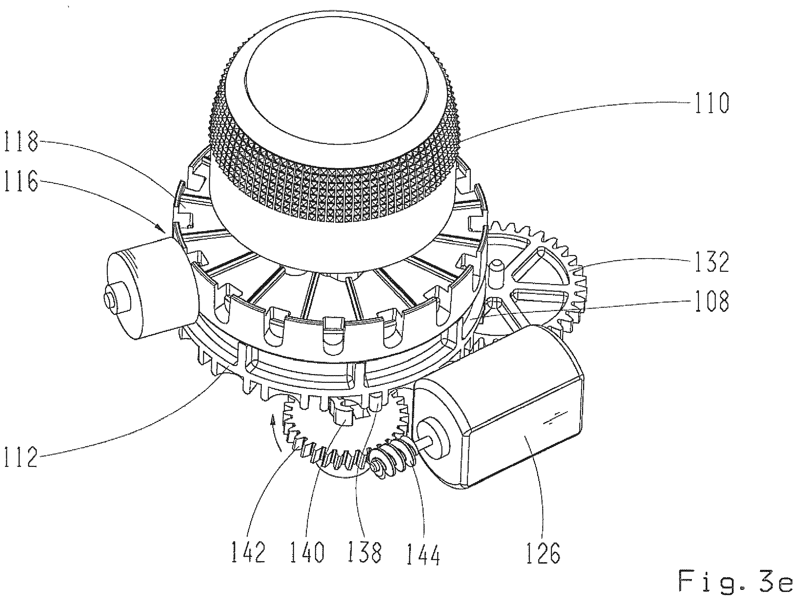

Die Fig. 3e zeigt den durch die weiter im Uhrzeigersinn rotierende Zahnradstruktur 136 gerade aus dem radialen Schlitz 112-1 der Malteserkreuzgetriebestruktur 112 austretenden Treiberbolzen 138, sowie den in die benachbarte Kreissegmentsperre 112-2 eintretenden Sperrbolzen 140. Hier befindet sich das Trägerbauteil 108 gerade im Übergang von der Bewegungsphase in die Stillstandsphase. Dabei kann eine Stillstandsphase beispielsweise stets genau einer bestimmten Schalterstellung ("P", "R", "N", "D", "S") in der Rastkurve 104 entsprechen.

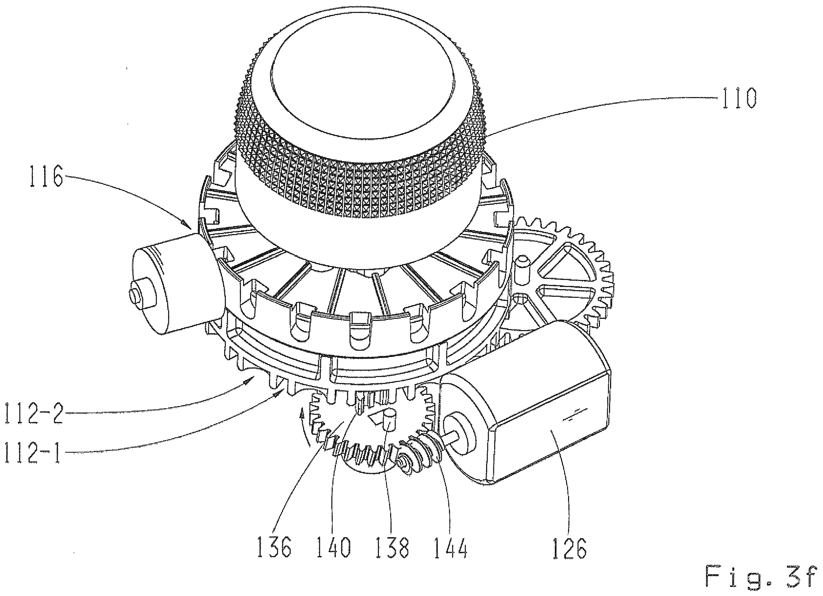

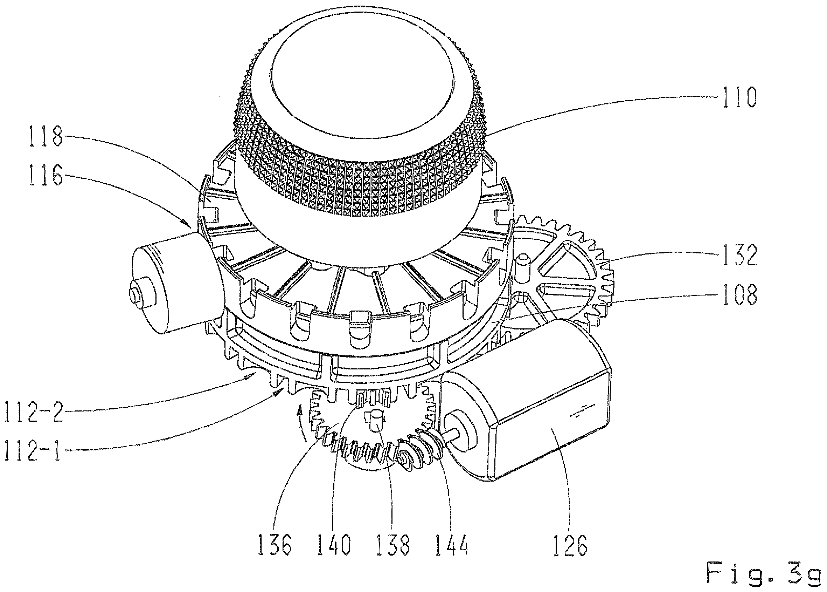

Die Fig. 3f und 3g betreffen ebenso die Stillstandsphase des Trägerbauteils 108 bei sich weiter im Uhrzeigersinn drehender Zahnradstruktur 136.

Zusammenfassend stellen die Figuren 3a bis 3g eine volle Umdrehung der das Trägerbauteil 108 antreibenden Zahnradstruktur 136 dar. Diese volle Umdrehung um 360° der Zahnradstruktur 136 kann dabei untergliedert werden in eine Stillstandsphase und in eine Bewegungsphase der damit im Eingriff stehenden Malteserkreuzgetriebestruktur 112. Während der Stillstandsphase ist das Trägerbauteil 108 durch die Geometrie der Malteserkreuzgetriebestruktur 112 und des darin eingreifenden Sperrbolzens 140 inhärent gegen Verdrehung und Spiel in Umfangsrichtung gesichert. Dies kann vorteilhaft zur Fixierung des Trägerbauteils 108 genutzt werden, für den Fall, dass eine Schaltbewegung über eine Verdrehung des Drehknaufs 110 stattfinden soll, anstatt der soeben beschrieben Verdrehung des Trägerbauteils 108.

Nachdem im Vorhergehenden detailliert auf das Trägerbauteil 108 und dessen mit der Antriebseinrichtung 114 zusammenwirkenden Malteserkreuzgetriebestruktur 112 eingegangen wurde, wird im Nachfolgenden eine Sperrfunktionalität für das Bedienelement bzw. den Drehknauf 110 näher betrachtet.

Gemäß Ausführungsbeispielen kann die in der Fig. 1 dargestellte Vorrichtung 100 ferner eine Fixiereinrichtung 116 aufweisen, die ausgebildet ist, um das Bedienelement 110 (und den damit drehfest gekoppelten Rastbolzen) vor und während einer durch Zusammenwirken der Antriebseinrichtung 114 und der Malteserkreuzgetriebestruktur 112 erfolgenden Verdrehung des Trägerbauteils 108 relativ zu dem Bedienteil 110 bzw. dem Rastbolzen in einer absoluten Winkelstellung bzw. -position zu fixieren. Gemäß der hier gezeigten Ausführungsform kann die Fixiereinrichtung 116 dazu eine drehfest mit dem Bedienelement 110 bzw. dem Rastbolzen gekoppelte Sperrscheibe 118 aufweisen, an deren Umfang eine Mehrzahl von Ausnehmungen 120 angeordnet sein kann. Dabei kann jede der Ausnehmungen 120 einer der Schalterstellungen ("P", "R", "N", "D", "S") entsprechen. Ferner kann die Fixiereinrichtung 116 eine Sperreinrichtung 122 aufweisen, die ausgebildet ist, um zum Fixieren der absoluten Winkelstellung des Rastbolzens bzw. des Bedienteils 110 einen Sperrbolzen in wenigstens eine der Ausnehmungen 120 der Sperrscheibe 118 zu führen.

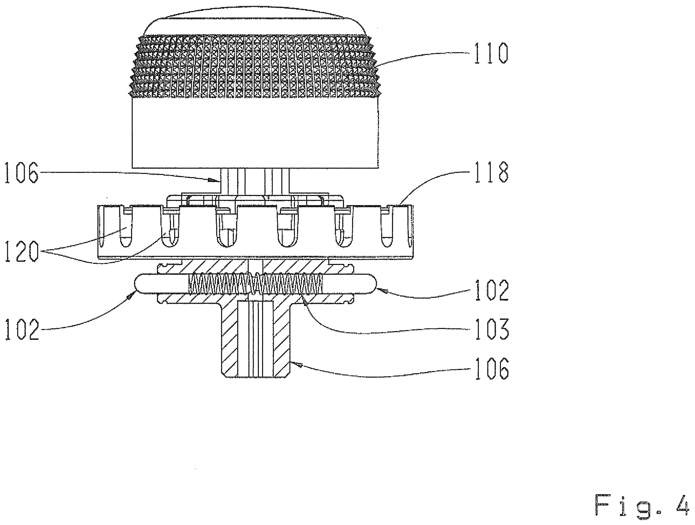

Wie es vorher bereits beschrieben wurde und es sich nun insbesondere aus der Fig. 4 erkennen lässt, können das Bedienelement 110 (Drehknauf), die Sperrscheibe 118 und zwei Rastbolzen 102 über eine Welle 106 drehfest miteinander gekoppelt sein. Die Welle 106 kann mit ihrem in axialer Richtung unten liegenden Bereich, d.h. dem Bereich unterhalb der Rastbolzen 102, in die dafür vorgesehene mittig angeordnete kreisförmige Öffnung des Trägerbauteils 108 eingreifen (siehe z.B. Fig. 2). Die an ihrem radialen Ende jeweils abgerundeten Rastbolzen 102, welche in radialer Richtung über eine Feder 103 verschiebbar gelagert sind, können in zusammengebautem Zustand in die in gegenüberliegenden Umfangsbereiche der in das Trägerbauteil 108 eingeformten Rastierung 104 eingreifen. Durch Drehen und/oder Drücken des Drehknaufs 110 können die Rastbolzen 102 in der Rastkurve 104 unterschiedliche Schalterstellungen ("P", "R", "N", "D", "S") einnehmen.

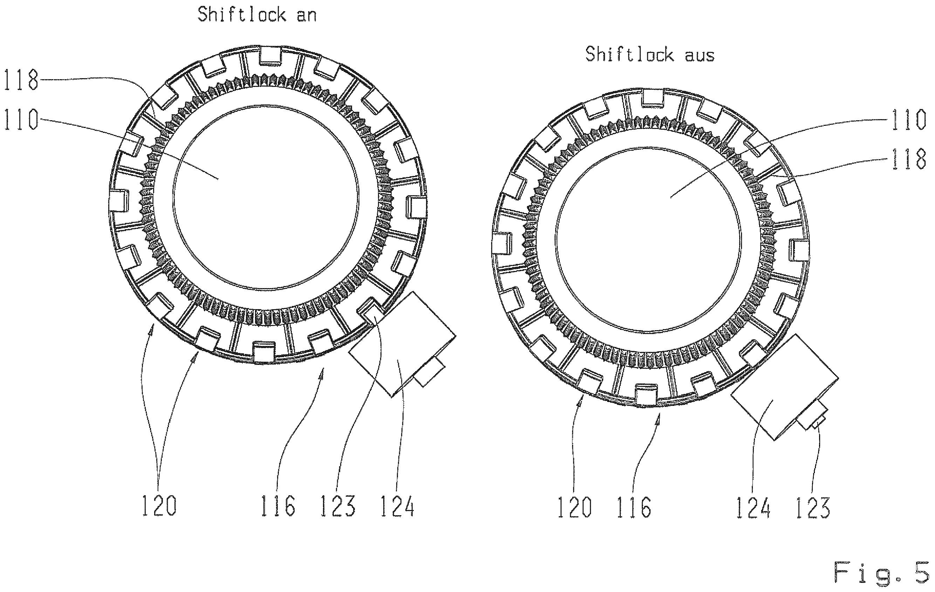

Wie es bereits beschrieben wurde, können in die Öffnungen bzw. Ausnehmungen 120 der zwischen dem Trägerbauteil 108 und dem Bedienelement 110 angeordneten Sperrscheibe 118 Sperrbolzen eingreifen, um die Rastbolzen 102 und damit das Bedienelement 110 während einer (intermittierenden) Rotation des Trägerbauteils 108 in einer absoluten Winkelposition festzulegen. Dadurch können Rastbolzen 102 und Rastkurve 104 relativ zueinander verdreht werden, z.B. zum Realisieren einer AutoP-Funktion. Dies wird anhand der Fig. 5 näher veranschaulicht.

Die Fig. 5, links, zeigt das in einer bestimmten Winkelposition fixierte Bedienelement 110 ("Shiftlock an") in einer Draufsicht. Wie man erkennen kann, greift ein Sperrbolzen 123 in eine am Umfang der Sperrscheibe 118 befindliche Ausnehmung 120 ein und verhindert somit eine Verdrehung des Drehkaufs 110. Bei dem hier gezeigten Ausführungsbeispiel sind in Umfangsrichtung insgesamt 16 Ausnehmungen 120 an der Sperrscheibe 118 angeordnet. Dies entspricht 16 um einen Winkel von 22,5° getrennten Ausnehmungen 120, was lediglich exemplarisch zu verstehen ist.

Gemäß einem Ausführungsbeispiel kann der Sperrbolzen 123 aus einem magnetischen oder ferromagnetischen Material gefertigt oder damit gekoppelt sein, so dass er von einem Elektromagneten 124 der Sperreinrichtung 122 betätigt werden kann. Beispielsweise kann der Sperrbolzen 123 bei eingeschaltetem Strom aus einer radial äußeren Position ("Shiftlock aus") in eine radial innenliegende Position ("Shiftlock an") wechseln, und somit den Sperr- bzw. Fixiermechanismus für das Bedienelement 110 und die damit drehfest gekoppelten Rastbolzen 102 auslösen. Während die Fig. 5, links, das gegen Verdrehung gesicherte Bedienelement 110 dargestellt, zeigt die Fig. 5, rechts, das frei rotierbare Bedienelement 110, d.h., ohne Fixierung. Der Sperrbolzen 123 ist hier radial zurückgefahren, so dass eine Drehung des Bedienelements 110 samt der Sperrscheibe 118 und der Rastbolzen 102 relativ zu dem (dann fixierten) Trägerbauteil 108 möglich ist.

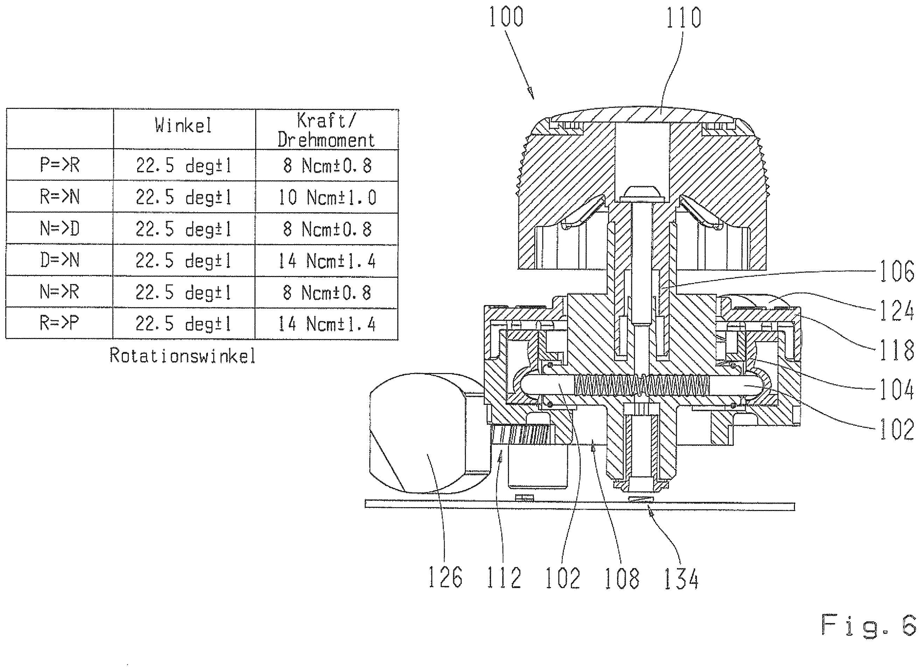

Die Fig. 6 zeigt die Vorrichtung 100 zum Auswählen einer gewünschten Schalterstellung in einer Schnittdarstellung. Es lässt sich erkennen, dass in axialer Richtung gesehen, d.h., in Richtung entlang der Rotationsachse der Welle 106, das Bedienelement 110 oberhalb der Sperrscheibe 118 angeordnet ist. Die unterhalb der Sperrscheibe angeordneten Rastbolzen 102 greifen in die Struktur der Rastkurve 104 ein, welche in einen inneren Umfangsbereich des Trägerbauteils 108 eingeformt ist. Durch Drücken und/oder Drehen des Bedienelements 110 nach unten kann, wie es anhand der Fig. 2 bereits erläutert wurde, von einer Schalterstellung "D" in einem axial oberen Bereich der Rastkurve 104 in eine Schalterstellung" S" in dem axial unteren Bereich der Rastkurve 104 gewechselt werden.

In einem ersten Betriebsmodus ist das Trägerbauteil 108 fixiert, d.h., unverdrehbar. Dies entspricht beispielsweise einer Sperrstellung von Zahnradstruktur 136 und Malteserkreuzgetriebestruktur 112, wie sie in der Fig. 3a dargestellt ist. In diesem ersten Betriebsmodus kann beispielsweise ein Fahrer eines Kraftfahrzeugs den Drehknauf 110 betätigen und damit die Rastbolzen 102 entlang der Kontur der Rastkurve 104 verschieben bzw. verdrehen. Das heißt, in diesem ersten Betriebsmodus ist das Trägerbauteil 108 gegen Verdrehung spielarm fixiert und Schalterstellungen werden über das Bedienteil 110 verändert.

In einem zweiten Betriebsmodus verhält es sich genau umgekehrt. D.h., hier sind das Bedienelement 110 und damit auch die Rastbolzen 102 vermittels der Fixiereinrichtung 116 gegen Verdrehung gesichert. Im Gegensatz zum ersten Betriebsmodus kann in dem zweiten Betriebsmodus das Trägerbauteil 108 mit seiner darin integrierten Rastkurve 104 gegenüber dem festgelegten Bedienteil 110 bzw. den Rastbolzen 102 verdreht werden. Dies geschieht, wie es bereits erläutert wurde, vermittels der aktuatorischen Antriebseinrichtung 114. Die Antriebseinrichtung 114 kann also gemäß Ausführungsbeispielen ausgebildet sein, um das Trägerbauteil 108 relativ zu dem Rastbolzen 102 zu verdrehen, während der Rastbolzen 102 vermittels der Fixiereinrichtung 116 in seiner absoluten Winkelstellung fixiert ist. Dadurch kann beispielsweise automatisch in eine P-Stellung eines Automatikgetriebes zurückgefahren werden (AutoP-Funktion).

Wie es bereits erläutert wurde, kann die Antriebseinrichtung 114 einen in Abhängigkeit der absoluten Winkelstellung des Trägerbauteils 108 und/oder in Abhängigkeit der absoluten Winkelstellung des Rastbolzens 102 (oder eines damit gekoppelten Bauteils) steuerbaren Elektromotor 126 aufweisen. Zum Bestimmen der absoluten Winkelstellung der Malteserkreuzgetriebestruktur 112 bzw. des Trägerbauteils 108 kann das rotierbare Trägerbauteil 108 eine ringförmige Zahnradstruktur 130 umfassen (siehe Fig. 2, rechts), welche mit einem Sensorzahnrad 132 (siehe Fig. 1 bzw. Fig. 3a bis g) zur Ermittlung der absoluten Winkelstellung des Trägerbauteils 108 in Eingriff gebracht werden kann. Ferner kann die Vorrichtung 100 eine weitere Winkelerfassungseinrichtung 134 umfassen, die ausgebildet ist, um eine absolute Winkelstellung des Rastbolzens 102 und/oder der Welle 106 zu erfassen. Aus derart ermittelten absoluten Winkelpositionen der relativ zueinander rotierbaren Bauteile 110 und 108 können dann wiederum den einzelnen Schalterpositionen ("P", "R", "N", "D", "S") entsprechende relative Winkel zueinander bestimmt werden. Die Drehschaltung 100 kann also mit einer absoluten Positionssensorik ausgestattet sein. Die Schaltpositionen ("P", "R", "N", "D", "S") können durch die direkte Sensierung der Drehknaufachse 106 erfasst werden. Die Lage der Rastierung nach "AutoP" kann durch die Position des Sensorzahnrads 132 erfasst werden. Das Trägerbauteil 108 kann hierbei solange vom Aktor 114 zurückgedreht werden, bis die Sensorwerte von Drehknaufachse 106 bzw. des Sensors 134 und Sensorzahnrad 132 übereinstimmen bzw. einen vordefinierten Relativwert zueinander einnehmen. Somit ist es möglich, automatisch jede beliebige Schalterstellung anzufahren. Dabei sind Relativverdrehungen von Bedienelement 110 und Träger 108 sowohl in als auch entgegen dem Uhrzeigersinn möglich. Beispielhafte Rastkräfte, die dazu überwunden werden müssen, sind in der Tabelle der Fig. 6 dargestellt.

Durch den Einsatz des Malteserkreuzgetriebes bzw. der Malteserkreuzgetriebestruktur 112 am Träger 108 kann man im Zusammenspiel mit der Antriebseinrichtung 114 gegenüber dem Stand der Technik bessere Übersetzungsverhältnisse erhalten. Dadurch kann ein einfacher Elektromotor 126 mit einer gegenüber dem Stand der Technik gröberen Auflösung eingesetzt werden. Des Weiteren ermöglichen Ausführungsbeispiele eine höhere Genauigkeit und eine geräuschärmere Verstellfunktion. Außerdem kann nachteiliges Spiel zwischen dem Antriebsaktor 114 und dem Trägerbauteil 108 vermieden werden.

Bei manchen Ausführungsbeispielen der vorliegenden Erfindung können sämtliche oder zumindest ein Teil der beschriebenen Bauteile aus Kunststoff gefertigt sein, um insbesondere Gewicht einzusparen und günstige Herstellungsverfahren, wie z.B. Spritzgussverfahren, einsetzen zu können. Dabei sollte natürlich eine gewisse Festigkeit und Verschleißbeständigkeit der Bauteile gegeben sein, insbesondere im Hinblick auf die zu überwindenden Rastkräfte.

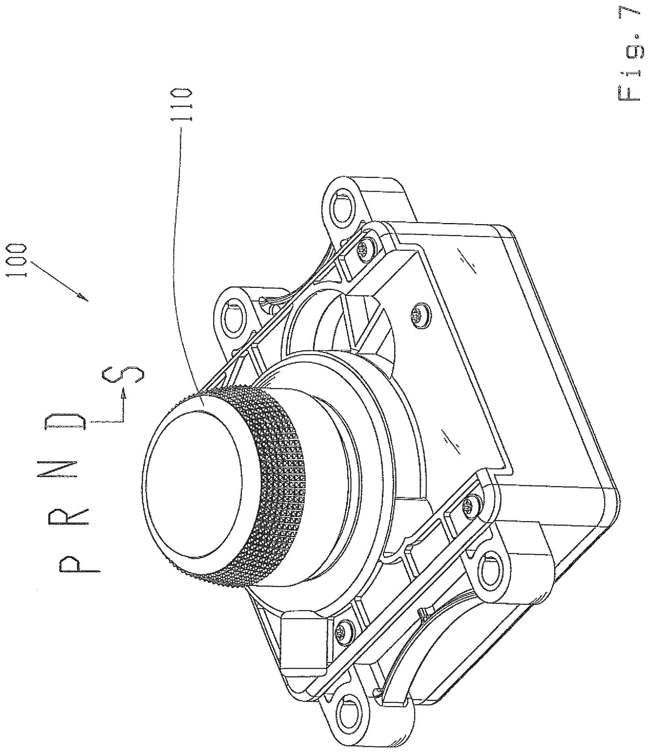

Die Fig. 7 zeigt zusammenfassend die Vorrichtung 100 mit ihrem Bedienelement 110 in einem Gehäuse. Die hier dargestellte Vorrichtung 100 kann beispielsweise zum Auswählen einer gewünschten Fahrstufe aus einer Mehrzahl von Fahrstufen eines Kraftfahrzeugs bzw. eines Getriebes angepasst sein. Ausführungsbeispiele umfassen daher ebenso ein Fahrzeug mit einer darin integrierten erfindungsgemäßen Auswahlvorrichtung 100.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen von Bedeutung sein.

Obwohl manche Aspekte der vorliegenden Erfindung im Zusammenhang mit einer Vorrichtung beschrieben wurden, versteht es sich, dass diese Aspekte auch eine Beschreibung eines entsprechenden Verfahrens darstellen, sodass ein Block oder ein Bauelement einer Auswahlvorrichtung auch als ein entsprechender Verfahrensschritt oder als ein Merkmal eines Verfahrensschritts, beispielsweise einem Verfahren zum Auswählen einer gewünschten Schalterstellung aus einer Mehrzahl von Schalterstellungen, zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

### Bezugszeichen

- 100: Vorrichtung zum Auswählen einer gewünschten Schalters- tellung gemäß einem Ausführungsbeispiel
- 102: Rastbolzen
- 104: Rastkurve
- 106: Welle bzw. Rotationsachse
- 108: Träger bzw. Trägerbauteil
- 110: Bedienelement bzw. Drehknauf
- 112: Malteserkreuzgetriebe bzw. Malteserkreuzgetriebestruktur
- 114: Antriebseinrichtung bzw. Antriebsaktor
- 116: Fixiereinrichtung bzw. Fixieraktor
- 118: Sperrscheibe
- 120: Ausnehmungen für Sperrbolzen
- 122: Sperreinrichtung
- 123: radialer Bolzen
- 124: Elektromagnet
- 126: Elektromotor
- 127: Platine
- 128: Antriebsstruktur
- 130: Zahnradstruktur bzw. Zahnrad
- 132: Sensorzahnrad
- 134: Winkelerfassungseinrichtung
- 136: Zahnradstruktur bzw. Zahnrad
- 138: Treiberbolzen
- 140: Sperrbolzen
- 142: Zähne
- 144: Schnecke bzw. Schneckenrad

## Patentansprüche

1. Vorrichtung (100) zum Auswählen einer gewünschten Schalterstellung aus einer Mehrzahl von Schalterstellungen, wobei eine Schalterstellung von einer Stellung wenigstens eines Rastbolzens (102) relativ zu einer Rastkurve (104) abhängt, mit folgenden Merkmalen:
ein unterhalb einer Bedienoberfläche anordenbares und relativ zu dem Rastbolzen (102) um eine Welle (106) rotierbares Trägerbauteil (108) für ein Bedienelement (110), wobei in dem Trägerbauteil (108) die Rastkurve (104) ausgebildet ist, **dadurch gekennzeichnet, dass** in das Trägerbauteil (108) eine Malteserkreuzgetriebestruktur (112) eingeformt ist; und dass die Vorrichtung (100)
eine mit der Malteserkreuzgetriebestruktur (112) in Eingriff stehende Antriebseinrichtung (114) aufweist, die ausgebildet ist, um das Trägerbauteil (108) mit der Rastkurve (104) relativ zu dem Rastbolzen (102) abhängig von der gewünschten Schalterstellung um die Welle (106) zu verdrehen.

2. Vorrichtung (100) nach Anspruch 1, **dadurch gekennzeichnet, dass** die Vorrichtung (100) ferner eine Fixiereinrichtung (116) umfasst, die ausgebildet ist, um den Rastbolzen (102) in einer absoluten Winkelstellung zu fixieren.

3. Vorrichtung (100) nach Anspruch 2, **dadurch gekennzeichnet, dass** die Fixiereinrichtung (116) folgende Merkmale umfasst:
eine drehfest mit dem Rastbolzen (102) gekoppelte Sperrscheibe (118), an deren Umfang eine Mehrzahl von Ausnehmungen (120) angeordnet ist, wobei jede der Ausnehmungen (120) einer der Schalterstellungen entspricht; und
eine Sperreinrichtung (122), die ausgebildet ist, um zum Fixieren der absoluten Winkelstellung des Rastbolzens (102) einen Sperrbolzen (123) in wenigstens eine der Ausnehmungen (120) der Sperrscheibe (118) zu führen.

4. Vorrichtung nach Anspruch 3, **dadurch gekennzeichnet, dass** die Sperrscheibe (118) zwischen dem Trägerbauteil (108) und dem Bedienelement (110) angeordnet ist und drehfest mit der Welle (106) gekoppelt ist.

5. Vorrichtung nach Anspruch 3 oder 4, **dadurch gekennzeichnet, dass** die Sperreinrichtung (122) einen Elektromagneten (124) zum Betätigen des Sperrbolzens (123) umfasst.

6. Vorrichtung (100) nach einem der Ansprüche 2 bis 5, **dadurch gekennzeichnet, dass** die Antriebseinrichtung (114) ausgebildet ist, um das Trägerbauteil (108) relativ zu dem Rastbolzen (102) zu verdrehen, während der Rastbolzen (102) vermittels der Fixiereinrichtung (116) in der absoluten Winkelstellung fixiert ist.

7. Vorrichtung (100) nach einem der vorhergehenden Ansprüche, **dadurch gekennzeichnet, dass** die Antriebseinrichtung (114) folgende Merkmale aufweist:
einen in Abhängigkeit von einer absoluten Winkelstellung der Malteserkreuzgetriebestruktur (112) und/oder in Abhängigkeit einer absoluten Winkelstellung des Rastbolzens (102) oder eines damit gekoppelten Bauteils steuerbaren Elektromotor (126); und
eine vermittels des Elektromotors (126) antreibbare und mit der Malteserkreuzgetriebestruktur (112) in Eingriff stehende Antriebsstruktur (128) für das rotierbare Trägerbauteil (108).

8. Vorrichtung (100) nach Anspruch 7, **dadurch gekennzeichnet, dass** das rotierbare Trägerbauteil (108) zur Erfassung der absoluten Winkelstellung der Malteserkreuzgetriebestruktur (112) ferner eine ringförmige Zahnradstruktur (130) umfasst, welche mit einem Sensorzahnrad (132) zur Ermittlung der der absoluten Winkelstellung in Eingriff steht.

9. Vorrichtung (100) nach einem der Ansprüche 7 oder 8, **dadurch gekennzeichnet, dass** die Antriebsstruktur (128) folgende Merkmale aufweist:
eine Zahnradstruktur (136) mit einem auf einer der Malteserkreuzgetriebestruktur (112) zugewandten Stirnfläche der Zahnradstruktur (136) angeordneten ersten Eingriffselement (138) und einem auf der Stirnfläche angeordneten zweiten Eingriffselement (140), wobei das erste Eingriffselement und das zweite Eingriffselement (138; 140) bei einer Rotation der Zahnradstruktur (136) abwechselnd in die Malteserkreuzgetriebestruktur (112) eingreifen, um eine intermittierende Drehung der Malteserkreuzgetriebestruktur (112) zu bewirken; und
eine vermittels des Elektromotors (126) rotierbare und mit am Umfang der Zahnradstruktur (136) befindlichen Zähnen (142) in Eingriff stehende Schnecke (144), um durch Wechselwirkung zwischen der rotierenden Schnecke (144) und den Zähnen (142) die Zahnradstruktur (136) in Rotation versetzen zu können.

10. Vorrichtung (100) nach einem der vorhergehenden Ansprüche, **dadurch gekennzeichnet, dass** die Vorrichtung (100) ferner eine Winkelerfassungseinrichtung (134) umfasst, die ausgebildet ist, um eine absolute Winkelstellung des Rastbolzens (102) und/oder der Welle (106) zu erfassen.

11. Vorrichtung (100) nach einem der vorhergehenden Ansprüche, **dadurch gekennzeichnet, dass** der Rastbolzen (102) mit einem oberhalb der Bedienoberfläche anordenbaren Drehknopf (110) der Vorrichtung (100) über die Welle (106) drehfest gekoppelt ist.

12. Vorrichtung (100) nach einem der vorhergehenden Ansprüche, **dadurch gekennzeichnet, dass** die Malteserkreuzgetriebestruktur (112) auf einer dem Bedienelement (110) abgewandten Seite des Trägerbauteils (108) in das Trägerbauteil (108) eingeformt ist.

13. Kraftfahrzeug mit einer Vorrichtung (100) nach einem der vorhergehenden Ansprüche, **dadurch gekennzeichnet, dass** die Vorrichtung (100) zum Auswählen eines gewünschten Fahrstufe aus einer Mehrzahl von Fahrstufen des Kraftfahrzeugs ausgebildet ist.

14. Verfahren zum Auswählen einer gewünschten Schalterstellung aus einer Mehrzahl von Schalterstellungen für eine Vorrichtung,
wobei eine Schalterstellung von einer Stellung wenigstens eines Rastbolzens (102) relativ zu einer Rastkurve (104) abhängt, wobei die Vorrichtung ausgestattet ist mit einem unterhalb einer Bedienoberfläche anordenbaren und relativ zu dem Rastbolzen (102) um eine Welle (106) rotierbaren Trägerbauteil (108) für ein Bedienelement (110),
wobei in dem Trägerbauteil (108) die Rastkurve (104) ausgebildet ist, und wobei in das Trägerbauteil (108) eine Malteserkreuzgetriebestruktur (112) eingeformt ist; **gekennzeichnet durch** den Schritt:
Verdrehen des Trägerbauteils (108) mittels einer mit der Malteserkreuzgetriebestruktur (112) in Eingriff stehenden Antriebseinrichtung (114), so dass sich das Trägerbauteil (108) mit der Rastkurve (104) relativ zu dem Rastbolzen (102) abhängig von der gewünschten Schalterstellung um die Welle (106) dreht.

## Claims

1. Apparatus (100) for selecting a desired switch position from a multiplicity of switch positions, wherein a switch position is dependent on a position of at least one detent pin (102) relative to a detent cam (104), having the following features:
a carrier component (108), which is arrangeable under an operator control surface and which is rotatable relative to the detent pin (102) about a shaft (106), for an operator control element (110), wherein the detent cam (104) is formed in the carrier component (108), **characterized in that** a Maltese-cross gearing structure (112) is formed into the carrier component (108); and **in that** the apparatus (100)
has a drive device (114) which is in engagement with the Maltese-cross gearing structure (112) and which is designed to rotate the carrier component (108) with the detent cam (104) relative to the detent pin (102) about the shaft (106) in a manner dependent on the desired switch position.

2. Apparatus (100) according to Claim 1, **characterized in that** the apparatus (100) furthermore comprises a fixing device (116) which is designed to fix the detent pin (102) in an absolute angular position.

3. Apparatus (100) according to Claim 2, **characterized in that** the fixing device (116) comprises the following features:
a blocking disk (118) which is coupled rotationally conjointly to the detent pin (102) and at the circumference of which there is arranged a multiplicity of recesses (120), wherein each of the recesses (120) corresponds to one of the switch positions; and
a blocking device (122) which is designed to guide a blocking pin (123) in at least one of the recesses (120) of the blocking disk (118) in order to fix the absolute angular position of the detent pin (102).

4. Apparatus according to Claim 3, **characterized in that** the blocking disk (118) is arranged between the carrier component (108) and the operator control element (110) and is coupled rotationally conjointly to the shaft (106).

5. Apparatus according to Claim 3 or 4, **characterized in that** the blocking device (122) comprises an electromagnet (124) for actuating the blocking pin (123) .

6. Apparatus (100) according to any of Claims 2 to 5, **characterized in that** the drive device (114) is designed to rotate the carrier component (108) relative to the detent pin (102) whilst the detent pin (102) is fixed in the absolute angular position by means of the fixing device (116).

7. Apparatus (100) according to any of the preceding claims, **characterized in that** the drive device (114) has the following features:
an electric motor (126) which is controllable in a manner dependent on absolute angular position of the Maltese-cross gearing structure (112) and/or in a manner dependent on an absolute angular position of the detent pin (102) or of a component coupled thereto; and
a drive structure (128), which is driveable by means of the electric motor (126) and which is in engagement with the Maltese-cross gearing structure (112), for the rotatable carrier component (108).

8. Apparatus (100) according to Claim 7, **characterized in that** the rotatable carrier component (108) furthermore comprises, for the detection of the absolute angular position of the Maltese-cross gearing structure (112), an annular toothed wheel structure (130) which is in engagement with a sensor toothed wheel (132) for the determination of the absolute angular position.

9. Apparatus (100) according to either of Claims 7 and 8, **characterized in that** the drive structure (128) has the following features:
a toothed wheel structure (136) having a first engagement element (138), which is arranged on a face surface, facing towards the Maltese-cross gearing structure (112), of the toothed wheel structure (136), and having a second engagement element (140) which is arranged on the face surface, wherein, during a rotation of the toothed wheel structure (136), the first engagement element and the second engagement element (138; 140) engage alternately into the Maltese-cross gearing structure (112) in order to effect an intermittent rotation of the Maltese-cross gearing structure (112); and
a worm (144) which is rotatable by means of the electric motor (126) and which is in engagement with teeth (142) situated at the circumference of the toothed wheel structure (136), in order to be able to set the toothed wheel structure (136) in rotation by means of interaction between the rotating worm (144) and the teeth (142).

10. Apparatus (100) according to any of the preceding claims, **characterized in that** the apparatus (100) furthermore comprises an angle detection device (134) which is designed to detect an absolute angular position of the detent pin (102) and/or of the shaft (106).

11. Apparatus (100) according to any of the preceding claims, **characterized in that** the detent pin (102) is coupled rotationally conjointly by means of the shaft (106) to a rotary knob (110), which is arrangeable above the operator control surface, of the apparatus (100).

12. Apparatus (100) according to any of the preceding claims, **characterized in that** the Maltese-cross gearing structure (112) is formed into the carrier component (108) on a side of the carrier component (108) which is averted from the operator control element (110).

13. Motor vehicle having an apparatus (100) according to any of the preceding claims, **characterized in that** the apparatus (100) is designed for selecting a desired drive position from a multiplicity of drive positions of the motor vehicle.

14. Method for selecting a desired switch position from a multiplicity of switch positions for an apparatus, wherein a switch position is dependent on a position of at least one detent pin (102) relative to a detent cam (104), wherein the apparatus is equipped with a carrier component (108), which is arrangeable under an operator control surface and which is rotatable relative to the detent pin (102) about a shaft (106), for an operator control element (110), wherein the detent cam (104) is formed in the carrier component (108), and wherein a Maltese-cross gearing structure (112) is formed into the carrier component (108); **characterized by** the step of:
rotating the carrier component (108) by means of a drive device (114) which is in engagement with the Maltese-cross gearing structure (112), such that the carrier component (108) with the detent cam (104) rotates relative to the detent pin (102) about the shaft (106) in a manner dependent on the desired switch position.

## Revendications

1. Dispositif (100) de sélection d'une position désirée d'un commutateur parmi une multiplicité de positions de commutateur, dans lequel une position du commutateur dépend d'une position d'au moins un boulon d'arrêt (102) par rapport à une came d'enclenchement (104), présentant les caractéristiques suivantes:
un élément de support (108) pour un élément de commande (110), pouvant être disposé en dessous d'une surface de commande et pouvant tourner autour d'un arbre (106) par rapport au boulon d'arrêt (102), dans lequel la came d'enclenchement (104) est formée dans l'élément de support (108),
**caractérisé en ce qu'**une structure de transmission à croix de Malte (112) est formée dans l'élément de support (108) et **en ce que** le dispositif (100) présente un dispositif d'entraînement engrenant avec la structure de transmission à croix de Malte, qui est configuré de façon à faire tourner l'élément de support (108) avec la came d'enclenchement (104) autour de l'arbre (106) par rapport au boulon d'arrêt (102) en fonction de la position désirée du commutateur.

2. Dispositif (100) selon la revendication 1, **caractérisé en ce que** le dispositif (100) comprend en outre un dispositif de fixation (116), qui est configuré de façon à fixer le boulon d'arrêt (102) dans une position angulaire absolue.

3. Dispositif (100) selon la revendication 2, **caractérisé en ce que** le dispositif de fixation (116) comprend les caractéristiques suivantes:
un disque de blocage (118) couplé de façon calée en rotation au boulon d'arrêt (102), à la périphérie duquel sont disposés une multiplicité d'évidements (120), dans lequel chacun des évidements (120) correspond à une des positions du commutateur, et
un dispositif de blocage (122), qui est configuré de façon à guider un boulon de blocage (123) dans au moins un des évidements (120) du disque de blocage (118) pour fixer la position angulaire absolue du boulon d'arrêt (102) .

4. Dispositif selon la revendication 3, **caractérisé en ce que** le disque de blocage (118) est disposé entre l'élément de support (108) et l'élément de commande (110) et est couplé de façon calée en rotation à l'arbre (106).

5. Dispositif selon une revendication 3 ou 4, **caractérisé en ce que** le dispositif de blocage (122) comprend un électroaimant (124) pour actionner le boulon de blocage (123).

6. Dispositif (100) selon l'une quelconque des revendications 2 à 5, **caractérisé en ce que** le dispositif d'entraînement (114) est configuré de façon à faire tourner l'élément de support (108) par rapport au boulon d'arrêt (102), tandis que le boulon d'arrêt (102) est fixé dans la position angulaire absolue au moyen du dispositif de fixation (116).

7. Dispositif (100) selon l'une quelconque des revendications précédentes, **caractérisé en ce que** le dispositif d'entraînement (114) présente les caractéristiques suivantes:
un moteur électrique (126) pouvant être commandé en fonction d'une position angulaire absolue de la structure de transmission à croix de Malte (112) et/ou en fonction d'une position angulaire absolue du boulon d'arrêt (102) ou d'un composant couplé à celui-ci; et
une structure d'entraînement (128) pour l'élément de support rotatif (108), pouvant être entraînée par le moteur électrique (126) et engrenant avec la structure de transmission à croix de Malte (112).

8. Dispositif (100) selon la revendication 7, **caractérisé en ce que** l'élément de support rotatif (108) comprend en outre, pour la détection de la position angulaire absolue de la structure de transmission à croix de Malte (112), une structure de roue dentée annulaire (130), qui engrène avec une roue dentée de capteur (132) pour la détermination de la position angulaire absolue.

9. Dispositif (100) selon une des revendications 7 ou 8, **caractérisé en ce que** la structure d'entraînement (128) présente les caractéristiques suivantes:
une structure de roue dentée (136) avec un premier élément d'engrènement (138) disposé sur une face frontale de la structure de roue dentée (136) tournée vers la structure de transmission à croix de Malte (112) et avec un deuxième élément d'engrènement (140) disposé sur la face frontale, dans lequel le premier élément d'engrènement et le deuxième élément d'engrènement (138; 140) engrènent en alternance, lors d'une rotation de la structure de roue dentée (136), dans la structure de transmission à croix de Malte (112), afin de provoquer une rotation intermittente de la structure de transmission à croix de Malte (112); et
une vis sans fin (144) pouvant tourner au moyen du moteur électrique (126) et engrenant avec des dents (142) situées à la périphérie de la structure de roue dentée (136), afin de pouvoir mettre en rotation la structure de roue dentée (136) par l'interaction entre la vis sans fin rotative (144) et les dents (142).

10. Dispositif (100) selon l'une quelconque des revendications précédentes, **caractérisé en ce que** le dispositif (100) comprend en outre un dispositif de détection d'angle (134), qui est configuré de façon à détecter une position angulaire absolue du boulon d'arrêt (102) et/ou de l'arbre (106).

11. Dispositif (100) selon l'une quelconque des revendications précédentes, **caractérisé en ce que** le boulon d'arrêt (102) est couplé de façon calée en rotation au moyen de l'arbre (106) à une tête rotative (110) du dispositif (100) pouvant être disposée au-dessus de la surface de commande.

12. Dispositif (100) selon l'une quelconque des revendications précédentes, **caractérisé en ce que** la structure de transmission à croix de Malte (112) est formée dans l'élément de support (108) sur un côté de l'élément de support (108) détourné de l'élément de commande (110).

13. Véhicule automobile muni d'un dispositif (100) selon l'une quelconque des revendications précédentes, **caractérisé en ce que** le dispositif (100) est configuré de façon à sélectionner un rapport de vitesse désiré parmi une multiplicité de rapports de vitesse du véhicule automobile.

14. Procédé de sélection d'une position désirée d'un commutateur parmi une multiplicité de positions de commutateur pour un dispositif, dans lequel une position du commutateur dépend d'une position d'au moins un boulon d'arrêt (102) par rapport à une came d'enclenchement (104), dans lequel le dispositif est doté d'un élément de support (108) pour un élément de commande (110), pouvant être disposé en dessous d'une surface de commande et pouvant tourner autour d'un arbre (106) par rapport au boulon d'arrêt (102), dans lequel la came d'enclenchement (104) est formée dans l'élément de support (108), et dans lequel une structure de transmission à croix de Malte (112) est formée dans l'élément de support (108), **caractérisé par** l'étape suivante:
faire tourner l'élément de support (108) au moyen d'un dispositif d'entraînement (114) engrenant avec la structure de transmission à croix de Malte (112), de telle manière que l'élément de support (108) avec la came d'enclenchement (104) tourne autour de l'arbre (106) par rapport au boulon d'arrêt (102) en fonction de la position désirée du commutateur.
